# EUROPEAN PATENT APPLICATION

(11) **EP 4 759 501 A1**
(43) Date of publication of application: **17.06.2026**
(21) Application number: 24907336.2
(22) Date of filing: 13.12.2024
(51) Int. Cl.: B29B 17/02, C08J 3/24, C08J 11/06

(54) **METHOD FOR PRODUCING WATER ABSORBENT RESIN AND METHOD FOR PRODUCING WATER ABSORBENT RESIN PARTICLES**

(30) Priority: 18.12.2023 JP 2023212928
(71) Applicant: Sumitomo Seika Chemicals Co., Ltd., Kako-gun, Hyogo 675-0145 (JP)
(72) Inventor: MAEDA, Hiroki, Himeji-shi, Hyogo 672-8076 (JP)
(74) Representative: Hasegawa, Kan
(86) International application number: PCT/JP2024/044298
(87) International publication number: WO 2025/134951

(57) **Abstract**

A method for producing a water absorbent resin, comprising a dehydration step of dehydrating a water absorbent resin for recycling containing water and a water absorbent resin, wherein the dehydration step is carried out such that the water absorbent resin for recycling after the dehydration has a weight-average molecular weight of 1,000,000 or more, and wherein after the dehydration step, the water absorbent resin for recycling after the dehydration is placed in an environment where the weight-average molecular weight is 300,000 or more at a time point when 7 days have elapsed.

## Description

### Technical Field

The present invention relates to a method for producing a water absorbent resin and a method for producing water absorbent resin particles.

### Background Art

Generally, disposable sanitary articles are configured such that pulp fibers and a water absorbent resin are enclosed between a non-water-permeable cover sheet and a water-permeable non-woven fabric, and the water absorbent resin absorbs excrement by containing moisture and swelling. After use, such sanitary articles are treated by incineration or landfill, but recently, studies on recovery and reuse of members from used sanitary articles have been conducted. For example, Patent Literature 1 discloses a decomposition technology of a water absorbent resin focusing on cleavage of a cross-linking part in the water absorbent resin, and a technology of recovering a water soluble recycled polymer obtained by decomposing the water absorbent resin as an agglomerate by cross-linking with metal polyvalent ions.

### Citation List

### Patent Literature

Patent Literature 1: Japanese Unexamined Patent Publication No. 2020-49398

### Summary of Invention

### Technical Problem

When regenerating a water absorbent resin for recycling recovered from used sanitary articles, the water absorbent resin for recycling is dehydrated and inactivated. According to the findings of the present inventors, at this time, if the structure of the water absorbent resin contained in the water absorbent resin for recycling is destroyed by dehydration, the weight-average molecular weight of the water absorbent resin for recycling obtained after the dehydration (the weight-average molecular weight of a polymer obtained by solubilizing (cleaving the cross-linked structure of) the water absorbent resin contained in the water absorbent resin for recycling) becomes too small. If the weight-average molecular weight of the water absorbent resin for recycling becomes small, when water absorbent resin particles are produced by cross-linking the polymer obtained by cleaving the cross-linked structure of the water absorbent resin for recycling again, reuse becomes difficult because, for example, eluted components increase due to insufficient cross-linking of the water absorbent resin particles, or the amount of a cross-linking agent used for re-cross-linking increases.

Further, even if the weight-average molecular weight of the water absorbent resin for recycling obtained after the dehydration is large to some extent, if the structure of the water absorbent resin contained in the water absorbent resin for recycling is damaged during the dehydration, the structure of the water absorbent resin is gradually destroyed, and the weight-average molecular weight decreases. Therefore, when the water absorbent resin for recycling after the dehydration is stored for a certain period (for example, 7 days), the weight-average molecular weight of the water absorbent resin for recycling may become too small, making reuse difficult.

One aspect of the present invention relates to a method for producing a water absorbent resin that is easy to reuse from a water absorbent resin for recycling.

### Solution to Problem

One aspect of the present disclosure includes, for example, the following [1] to [6].
[1] A method for producing a water absorbent resin, comprising:
   a dehydration step of dehydrating a water absorbent resin for recycling comprising water and a water absorbent resin,
   wherein the dehydration step is carried out such that the water absorbent resin for recycling after the dehydration has a weight-average molecular weight of 1,000,000 or more, and
   wherein after the dehydration step, the water absorbent resin for recycling after the dehydration is placed in an environment where the weight-average molecular weight is 300,000 or more at a time point when 7 days have elapsed.
[2] The method for producing according to [1], wherein the dehydration step is a step of bringing the water absorbent resin for recycling into contact with at least one substance selected from the group consisting of an acid component, a polyvalent metal salt, and an alcohol.
[3] The method for producing according to [1] or [2], wherein a temperature of the environment is 70°C or less.
[4] The method for producing according to any one of [1] to [3], further comprising a storage step of storing the water absorbent resin for recycling after the dehydration,
   wherein the environment in which the water absorbent resin for recycling after the dehydration is stored in the storage step is an environment where the weight-average molecular weight of the water absorbent resin for recycling after the dehydration is maintained at 300,000 or more at a time point when the water absorbent resin for recycling has been stored for 7 days.
[5] The method for producing according to [4], wherein the storage step is a step of storing the water absorbent resin for recycling after the dehydration for 1 hour or more from the dehydration.
[6] A method for producing water absorbent resin particles, comprising:
   a preparation step of obtaining a water absorbent resin by the method for producing according to any one of [1] to [5];
   a cleavage step of cleaving a cross-linked structure of a cross-linked polymer contained in the water absorbent resin to obtain a polymer; and
   a cross-linking step of cross-linking the polymer.

### Advantageous Effects of Invention

According to one aspect of the present invention, it is possible to provide a method for producing a water absorbent resin that is easy to reuse from a water absorbent resin for recycling.

### Brief Description of Drawings

Fig. 1 is a cross-sectional view showing an example of an absorbent article having an absorbent core.
Fig. 2 is a schematic diagram showing a treatment tank for cleaving a cross-linked structure of a water absorbent resin.

### Description of Embodiments

The present invention is not limited to the following examples.

In the present specification, "(meth)acrylic" means both acrylic and methacrylic. "Acrylate" and "methacrylate" are similarly expressed as "(meth)acrylate". The same applies to other similar terms. "(Poly)" means both cases where there is a prefix of "poly" and where there is not. In the numerical ranges described stepwise in the present specification, the upper limit value or the lower limit value of a numerical range of a certain stage can be arbitrarily combined with the upper limit value or the lower limit value of a numerical range of another stage. In the numerical ranges described in the present specification, the upper limit value or the lower limit value of the numerical range may be replaced with the value shown in the Examples. The materials exemplified in the present specification may be used alone or in combination of two or more. "Physiological saline" refers to a 0.9 mass% sodium chloride aqueous solution.

An example of a method for producing a water absorbent resin includes a dehydration step of dehydrating a water absorbent resin for recycling containing water and a water absorbent resin. In the method, the dehydration step is carried out such that the weight-average molecular weight of the water absorbent resin for recycling after the dehydration is 1,000,000 or more, and after the dehydration step, the water absorbent resin for recycling after the dehydration is placed in an environment where the weight-average molecular weight is 300,000 or more at a time point when 7 days have elapsed. The water absorbent resin for recycling may be a used water absorbent resin (that is, a water absorbent resin that has become gel-like due to liquid absorption), may be an unused water absorbent resin (for example, waste of water absorbent resin generated during the production process of the water absorbent resin), or may be a mixture of both.

Examples of the absorbent article containing the water absorbent resin for recycling include diapers (for example, paper diapers), toilet training pants, incontinence pads, sanitary materials (sanitary napkins, tampons, etc.), sweat pads, pet sheets, portable toilet members, and animal excrement treatment materials. The absorbent article may be a used one. The water absorbent resin for recycling recovered from the used absorbent article may form a gel due to liquid absorption during use.

The water absorbent resin for recycling contains water and a water absorbent resin. The water absorbent resin for recycling may contain fibrous materials such as cellulosic fibers and synthetic fibers.

The water absorbent resin contains, for example, a polymer (cross-linked polymer) of an ethylenically unsaturated monomer. Examples of the ethylenically unsaturated monomer include (meth)acrylic acid and salts thereof, 2-(meth)acrylamido-2-methylpropanesulfonic acid and salts thereof, (meth)acrylamide, N,N-dimethyl(meth)acrylamide, 2-hydroxyethyl (meth)acrylate, N-methylol(meth)acrylamide, polyethylene glycol mono(meth)acrylate, N,N-diethylaminoethyl (meth)acrylate, N,N-diethylaminopropyl (meth)acrylate, and diethylaminopropyl (meth)acrylamide. The ethylenically unsaturated monomer may include at least one compound selected from the group consisting of acrylic acid and salts thereof, methacrylic acid and salts thereof, acrylamide, methacrylamide, and N,N-dimethylacrylamide.

The cross-linked polymer may contain monomers other than the ethylenically unsaturated monomer. The ratio of the ethylenically unsaturated monomer unit (particularly, (meth)acrylic acid and salts thereof) in the cross-linked polymer may be 70 to 100 mol% with respect to the total amount of the monomer units. Among the ethylenically unsaturated monomers, the ratio occupied by (meth)acrylic acid and salts thereof may be 70 to 100 mol%.

The water absorbent resin contains, for example, a cross-linked polymer having a poly(meth)acrylic acid structure. Examples of such a cross-linked polymer include a polymer obtained by polymerizing a monomer composition containing (meth)acrylic acid and a cross-linking agent capable of reacting with a carboxyl group of (meth)acrylic acid to form a covalent bond; a polymer obtained by polymerizing a monomer composition containing (meth)acrylic acid to obtain a polymer and then treating the surface of the polymer with a cross-linking agent capable of reacting with a carboxyl group of the polymer to form a covalent bond; and a polymer obtained by polymerizing a monomer composition containing (meth)acrylic acid and a cross-linking agent capable of reacting with a carboxyl group of (meth)acrylic acid to form a covalent bond to obtain a polymer and then treating the surface of the polymer with a cross-linking agent capable of reacting with a carboxyl group of the polymer to form a covalent bond.

The shape of the water absorbent resin for recycling is not particularly limited, and may be an amorphous lump shape if it is a used gel, and may be an amorphous crushed shape, a scale-like shape, a granular shape, or the like if it is unused (generally dry powder).

In the dehydration step, the water absorbent resin for recycling is dehydrated to obtain a water absorbent resin for recycling after the dehydration. In the dehydration step, the water absorbent resin for recycling may be inactivated to reduce the water absorption performance. Due to the inactivation, even if the water absorbent resin for recycling after the dehydration is brought into contact with water, the water absorbent resin for recycling after the dehydration absorbs water less easily than before the dehydration.

The dehydration of the water absorbent resin for recycling can be performed, for example, by bringing the water absorbent resin for recycling into contact with at least one substance selected from the group consisting of an acid component, a polyvalent metal salt, and an alcohol. The dehydration of the water absorbent resin for recycling may be performed by bringing it into contact with at least one substance of an acid component and a polyvalent metal salt from the viewpoint of sufficiently inactivating the water absorbent resin for recycling. The dehydration of the water absorbent resin for recycling may be performed by bringing the water absorbent resin for recycling into contact with an acid component from the viewpoint of facilitating the implementation of the cleavage step described later, or may be performed by bringing the water absorbent resin for recycling into contact with a polyvalent metal salt from the viewpoint of enabling storage in a high-temperature environment in the storage step described later.

The acid component may be an inorganic acid, may be an organic acid, or both may be used in combination. The inorganic acid may be, for example, at least one selected from the group consisting of nitric acid, sulfuric acid, hydrochloric acid, phosphoric acid, and boric acid. The organic acid may be, for example, at least one selected from the group consisting of acetic acid, succinic acid, citric acid, malic acid, lactic acid, and fumaric acid. The acid component may be at least one of citric acid and sulfuric acid from the viewpoint of suppressing destruction of the structure of the water absorbent resin, suppressing the weight-average molecular weight of the water absorbent resin for recycling after dehydration and after storage for a certain period from dehydration from becoming too small, and making it easier to produce a water absorbent resin that is easy to reuse, and may be citric acid because it has a chelating effect and a bactericidal effect.

The acid component brought into contact with the water absorbent resin for recycling may be in a liquid state such as an aqueous solution, or may be in a solid state such as a powder.

When the acid component is a liquid, the pH of the acid component may be 0.1 or more, 0.3 or more, 0.5 or more, 0.7 or more, 0.8 or more, 0.9 or more, 1.0 or more, or 1.1 or more from the viewpoint of sufficiently dehydrating the water absorbent resin for recycling, and may be 5.0 or less, 4.5 or less, 4.0 or less, 3.5 or less, 3.0 or less, 2.5 or less, 2.4 or less, or 2.3 or less from the viewpoint of suppressing destruction of the structure of the water absorbent resin contained in the water absorbent resin for recycling, suppressing the weight-average molecular weight of the water absorbent resin for recycling after dehydration and after storage for a certain period from dehydration from becoming too small, and making it easier to produce a water absorbent resin that is easy to reuse. The pH of the acid component may be 0.1 to 5.0, 0.3 to 4.5, 0.5 to 4.0, 0.7 to 3.5, 0.8 to 3.0, 0.9 to 2.5, or 1.0 to 2.4.

The amount (solid content) of the acid component brought into contact with the water absorbent resin for recycling may be 50 parts by mass or more, 100 parts by mass or more, 150 parts by mass or more, or 200 parts by mass or more with respect to 100 parts by mass of the water absorbent resin contained in the water absorbent resin for recycling from the viewpoint of sufficiently dehydrating the water absorbent resin for recycling, and may be 4000 parts by mass or less, 3000 parts by mass or less, or 2000 parts by mass or less from the viewpoint of suppressing destruction of the structure of the water absorbent resin contained in the water absorbent resin for recycling, suppressing the weight-average molecular weight of the water absorbent resin for recycling after dehydration and after storage for a certain period from dehydration from becoming too small, and making it easier to produce a water absorbent resin that is easy to reuse. From these viewpoints, the amount (solid content) of the acid component brought into contact with the water absorbent resin for recycling may be 50 to 4000 parts by mass, 100 to 4000 parts by mass, 150 to 3000 parts by mass, or 200 to 2000 parts by mass with respect to 100 parts by mass of the water absorbent resin for recycling.

The temperature when dehydrating the water absorbent resin for recycling by bringing the acid component into contact may be 0°C or higher, 10°C or higher, or 15°C or higher from the viewpoint of sufficiently dehydrating the water absorbent resin for recycling, and may be 100°C or lower, 80°C or lower, 60°C or lower, 40°C or lower, or 30°C or lower from the viewpoint of suppressing destruction of the structure of the water absorbent resin contained in the water absorbent resin for recycling, suppressing the weight-average molecular weight of the water absorbent resin for recycling after the dehydration step and after storage for a certain period from dehydration from becoming too small, and making it easier to produce a water absorbent resin that is easy to reuse. From these viewpoints, the temperature when dehydrating the water absorbent resin for recycling by bringing the acid component into contact may be 0 to 100°C, 10 to 60°C, 10 to 40°C, or 15 to 30°C. The temperature when dehydrating the water absorbent resin for recycling by bringing the acid component into contact may be 20°C or higher, 30°C or higher, 40°C or higher, 50°C or higher, 60°C or higher, 70°C or higher, or 80°C or higher.

The polyvalent metal salt is a salt of a divalent or higher metal. The divalent or higher metal may be, for example, at least one selected from the group consisting of calcium, aluminum, magnesium, titanium, chromium, manganese, iron, cobalt, nickel, cadmium, and lead.

The polyvalent metal salt may be an inorganic salt of a polyvalent metal or an organic salt of a polyvalent metal. Examples of the inorganic salt of a polyvalent metal include chlorides of polyvalent metals such as calcium chloride, aluminum chloride, and magnesium chloride; hydroxides of polyvalent metals such as calcium hydroxide, aluminum hydroxide, and magnesium hydroxide; and carbonates of polyvalent metals such as calcium carbonate, aluminum carbonate, and magnesium carbonate. Examples of the organic salt of a polyvalent metal include carboxylates of polyvalent metals such as calcium formate and calcium acetate. The polyvalent metal salt may be a chloride of a polyvalent metal or calcium chloride from the viewpoint of suppressing destruction of the structure of the water absorbent resin contained in the water absorbent resin for recycling, suppressing the weight-average molecular weight of the water absorbent resin for recycling after dehydration and after storage for a certain period from dehydration from becoming too small, and making it easier to produce a water absorbent resin that is easy to reuse. The polyvalent metal salt may be used alone or in combination of two or more.

The polyvalent metal salt brought into contact with the water absorbent resin for recycling may be in a liquid state such as an aqueous solution, or may be in a solid state such as a powder.

When the polyvalent metal salt is a liquid, the pH of the polyvalent metal salt may be 1.0 or more, 3.0 or more, 5.0 or more, 5.5 or more, 6.0 or more, 6.5 or more, or 7.0 or more from the viewpoint of suppressing destruction of the structure of the water absorbent resin contained in the water absorbent resin for recycling, suppressing the weight-average molecular weight of the water absorbent resin for recycling after dehydration and after storage for a certain period from dehydration from becoming too small, and making it easier to produce a water absorbent resin that is easy to reuse, and may be 13.0 or less, 12.5 or less, 12.0 or less, 11.5 or less, 11.0 or less, 10.5 or less, or 10.0 or less from the same viewpoint. The pH of the polyvalent metal salt may be 1.0 to 13.0, 3.0 to 12.5, 5.0 to 12.0, 5.5 to 11.5, 6.0 to 11.0, 6.5 to 10.5, or 7.0 to 10.0.

The amount (solid content) of the polyvalent metal salt brought into contact with the water absorbent resin for recycling may be 50 parts by mass or more, 100 parts by mass or more, 150 parts by mass or more, or 200 parts by mass or more with respect to 100 parts by mass of the water absorbent resin contained in the water absorbent resin for recycling from the viewpoint of sufficiently dehydrating the water absorbent resin for recycling, and may be 4000 parts by mass or less, 3000 parts by mass or less, or 2000 parts by mass or less from the viewpoint of suppressing destruction of the structure of the water absorbent resin contained in the water absorbent resin for recycling and increasing the weight-average molecular weight, thereby making it easier to produce a water absorbent resin that is easy to reuse. From these viewpoints, the amount (solid content) of the polyvalent metal salt brought into contact with the water absorbent resin for recycling may be 50 to 4000 parts by mass, 100 to 4000 parts by mass, 150 to 3000 parts by mass, or 200 to 2000 parts by mass with respect to 100 parts by mass of the water absorbent resin for recycling.

The temperature when dehydrating the water absorbent resin for recycling by bringing the polyvalent metal salt into contact may be 0°C or higher, 10°C or higher, or 15°C or higher from the viewpoint of sufficiently dehydrating the water absorbent resin for recycling, and may be 100°C or lower, 80°C or lower, 60°C or lower, 40°C or lower, or 30°C or lower from the viewpoint of suppressing destruction of the structure of the water absorbent resin contained in the water absorbent resin for recycling, suppressing the weight-average molecular weight of the water absorbent resin for recycling after dehydration and after storage for a certain period from dehydration from becoming too small, and making it easier to produce a water absorbent resin that is easy to reuse. From these viewpoints, the temperature when dehydrating the water absorbent resin for recycling by bringing the polyvalent metal salt into contact may be 0 to 100°C, 10 to 60°C, 10 to 40°C, or 15 to 30°C.

The alcohol may be, for example, at least one selected from the group consisting of methanol, ethanol, 2-propanol, t-butanol, isobutanol, pentanol, and hexanol. The amount of the alcohol brought into contact with the water absorbent resin for recycling may be 1000 to 1,000,000 parts by mass, or 10,000 to 100,000 parts by mass with respect to 100 parts by mass of the water absorbent resin contained in the water absorbent resin for recycling.

The dehydration step is carried out such that the weight-average molecular weight of the water absorbent resin for recycling after the dehydration is 1,000,000 or more. That is, the weight-average molecular weight of the water absorbent resin for recycling at the time of dehydration (weight-average molecular weight after dehydration) is 1,000,000 or more. The weight-average molecular weight of the water absorbent resin for recycling at the time of dehydration means the weight-average molecular weight of a polymer measured after the dehydration of the water absorbent resin for recycling is completed and the water absorbent resin for recycling after the dehydration is solubilized (the cross-linked structure is cleaved). Further, the weight-average molecular weight of the water absorbent resin for recycling at the time of dehydration (weight-average molecular weight of the polymer) is a value measured within 24 hours from the time when the dehydration of the water absorbent resin for recycling is completed, and it is sufficient if at least one measured value among one or a plurality of measured values of the weight-average molecular weight measured within 24 hours is 1,000,000 or more. Although the weight-average molecular weight of the water absorbent resin for recycling usually decreases due to dehydration, the dehydration step in the method for producing a water absorbent resin according to one embodiment includes not only the case where the weight-average molecular weight of the water absorbent resin for recycling decreased by dehydration becomes 1,000,000 or more, but also the case where the weight-average molecular weight of the water absorbent resin for recycling increases by dehydration to become 1,000,000 or more.

In the present specification, the weight-average molecular weight of the water absorbent resin for recycling means a weight-average molecular weight measured by light scattering GPC for a polymer obtained after solubilizing the water absorbent resin contained in the water absorbent resin for recycling to obtain a decomposition liquid containing the polymer. Specifically, it is measured by the method described in the Examples described later.

The weight-average molecular weight after dehydration may be 1,100,000 or more, 1,200,000 or more, 1,300,000 or more, 1,400,000 or more, 1,500,000 or more, 1,600,000 or more, 1,700,000 or more, 1,800,000 or more, 1,900,000 or more, or 2,000,000 or more, and may be 3,000,000 or less, 2,800,000 or less, 2,600,000 or less, 2,500,000 or less, or 2,400,000 or less. The weight-average molecular weight after dehydration may be 1,000,000 to 3,000,000, 1,200,000 to 2,800,000, 1,400,000 to 2,600,000, 1,600,000 to 2,500,000, or 1,800,000 to 2,400,000.

The swelling ratio of the water absorbent resin for recycling after the dehydration may be 2 times or more, 4 times or more, 6 times or more, 8 times or more, 10 times or more, 12 times or more, 14 times or more, 16 times or more, 18 times or more, 20 times or more, or 22 times or more, and may be 30 times or less, 28 times or less, 26 times or less, 24 times or less, 23 times or less, 22 times or less, 20 times or less, 18 times or less, 16 times or less, 14 times or less, 12 times or less, 10 times or less, 8 times or less, or 6 times or less. The swelling ratio of the water absorbent resin for recycling after the dehydration can be calculated by dividing the mass [g] of the water absorbent resin for recycling after the dehydration by the pure content [g] of the water absorbent resin in the water absorbent resin for recycling, and specifically, it is calculated by the method described in the Examples described later. The swelling ratio of the water absorbent resin for recycling after the dehydration may be 2 to 30 times, 2 to 26 times, 2 to 24 times, 4 to 30 times, 4 to 26 times, or 4 to 24 times.

After the dehydration step, the water absorbent resin for recycling after the dehydration is placed in an environment where the weight-average molecular weight is 300,000 or more at a time point when 7 days have elapsed. By placing the water absorbent resin for recycling after the dehydration in such an environment, a water absorbent resin that is easy to reuse can be produced. Although the weight-average molecular weight of the water absorbent resin for recycling usually decreases due to the lapse of 7 days after dehydration, the above environment includes not only the case where the weight-average molecular weight of the water absorbent resin for recycling decreased by the lapse of 7 days after dehydration is maintained at 300,000 or more, but also the case where the weight-average molecular weight of the water absorbent resin for recycling increases by the lapse of 7 days after dehydration to become 300,000 or more.

The temperature of the environment (environmental temperature) in which the water absorbent resin for recycling after the dehydration is placed may be 90°C or less, 80°C or less, 70°C or less, 60°C or less, or 50°C or less from the viewpoint of suppressing the weight-average molecular weight of the water absorbent resin for recycling from becoming too small. The environmental temperature may be, for example, 0°C or higher, 5°C or higher, 10°C or higher, 20°C or higher, 25°C or higher, 30°C or higher, 40°C or higher, or 50°C or higher. The environmental temperature may be 0 to 90°C, 0 to 80°C, 5 to 90°C, or 5 to 80°C.

The humidity of the environment (environmental humidity) in which the water absorbent resin for recycling after the dehydration is placed may be 100 RH% or less, 80 RH% or less, or 60 RH% or less.

The atmosphere gas of the environment in which the water absorbent resin for recycling after the dehydration is placed may be, for example, air, an inert gas such as nitrogen, or the like.

The method for producing water absorbent resin particles may comprise a storage step of storing the water absorbent resin for recycling after the dehydration after subjecting the water absorbent resin for recycling to the dehydration step. The environment in which the water absorbent resin for recycling after the dehydration is stored in the storage step may be an environment where the weight-average molecular weight of the water absorbent resin for recycling is maintained at 300,000 or more at a time point when the water absorbent resin for recycling after the dehydration step has been stored for 7 days. Note that storage means storing the water absorbent resin for recycling in a container or the like under a specific environment for 1 hour or more from the dehydration. The specific environment means an environment of a specific temperature and a specific humidity, and more specifically, means an environment maintained at a storage temperature described later ± 5°C and a storage humidity described later ± 5% RH.

In the storage step, for example, the water absorbent resin for recycling after the dehydration is filled in a container, and the water absorbent resin for recycling is stored under a specific temperature and a specific atmosphere. The material of the container for storing the water absorbent resin for recycling may be, for example, metal, resin, glass, or the like. When the material of the container is metal, examples of the metal include stainless steel and copper. When the material of the container is resin, examples of the resin include PE, PP, PS, PVC, and fluorine-based resin. The external shape of the container for storing the water absorbent resin for recycling may be, for example, a prismatic shape, a cylindrical shape, or an amorphous shape such as a bag.

The temperature of the environment for storing the water absorbent resin for recycling after the dehydration (storage temperature) may be determined according to the component brought into contact with the water absorbent resin for recycling in the dehydration step. When the water absorbent resin for recycling is brought into contact with an acid component in the dehydration step, the storage temperature may be, for example, 70°C or less from the viewpoint of suppressing destruction of the structure of the water absorbent resin contained in the water absorbent resin for recycling, suppressing the weight-average molecular weight of the water absorbent resin for recycling after storage for a certain period from becoming too small, and making it easier to produce a water absorbent resin that is easy to reuse. When the water absorbent resin for recycling is brought into contact with a polyvalent metal salt in the dehydration step, the destruction of the structure of the water absorbent resin contained in the water absorbent resin for recycling is suppressed more than when brought into contact with an acid component, so the storage temperature may be, for example, 90°C or less.

The storage temperature may be 90°C or less, 80°C or less, 70°C or less, 60°C or less, or 50°C or less from the viewpoint of suppressing destruction of the structure of the water absorbent resin contained in the water absorbent resin for recycling, suppressing the weight-average molecular weight of the water absorbent resin for recycling after storage for a certain period from becoming too small, and making it easier to produce a water absorbent resin that is easy to reuse. The storage temperature may be, for example, 0°C or higher, 5°C or higher, 10°C or higher, 20°C or higher, 25°C or higher, 30°C or higher, 40°C or higher, or 50°C or higher. That is, the environment for storage may be an environment in which the water absorbent resin for recycling after the dehydration is stored at the above storage temperature. The storage temperature may be 0 to 90°C, 0 to 80°C, 5 to 90°C, or 5 to 80°C.

The humidity for storing the water absorbent resin for recycling after the dehydration (storage humidity) may be 100 RH% or less, 80 RH% or less, or 60 RH% or less.

The atmosphere gas for storage may be, for example, air, an inert gas such as nitrogen, or the like.

The time for storing the water absorbent resin for recycling after the dehydration (storage time) may be the time until the cleavage step described later is carried out. In the storage step, for example, the water absorbent resin for recycling after the dehydration may be stored for 1 hour or more, 3 hours or more, 5 hours or more, 7 hours or more, 10 hours or more, 15 hours or more, or 24 hours or more from the dehydration, and may be stored for 170 hours or less, 160 hours or less, 150 hours or less, 140 hours or less, 130 hours or less, or 120 hours or less from the dehydration. The storage time may be 1 to 170 hours.

The environment in which the water absorbent resin for recycling after the dehydration is stored in the storage step is an environment where the weight-average molecular weight of the water absorbent resin for recycling is maintained at 300,000 or more at a time point when the water absorbent resin for recycling after the dehydration has been stored for 7 days. That is, in the storage step, the weight-average molecular weight of the water absorbent resin for recycling at a time point when the water absorbent resin for recycling after the dehydration has been stored for 7 days (weight-average molecular weight after storage) is 300,000 or more. The weight-average molecular weight of the water absorbent resin for recycling at a time point when it has been stored for 7 days means the weight-average molecular weight of the water absorbent resin for recycling measured within 24 hours after storing the water absorbent resin for recycling for 7 days after the dehydration step, and it is sufficient if at least one measured value among one or a plurality of measured values of the weight-average molecular weight measured within 24 hours is 300,000 or more. The weight-average molecular weight after storage is measured by the same method as the weight-average molecular weight after dehydration.

The weight-average molecular weight after storage may be 500,000 or more, 700,000 or more, 800,000 or more, 900,000 or more, 1,000,000 or more, 1,100,000 or more, 1,200,000 or more, 1,300,000 or more, 1,400,000 or more, 1,500,000 or more, 1,600,000 or more, 1,700,000 or more, 1,800,000 or more, 1,900,000 or more, or 2,000,000 or more, and may be 3,000,000 or less, 2,800,000 or less, 2,600,000 or less, 2,500,000 or less, 2,400,000 or less, or 2,300,000 or less. The weight-average molecular weight after storage may be 500,000 to 3,000,000, 500,000 to 2,600,000, 500,000 to 2,400,000, 700,000 to 3,000,000, 700,000 to 2,600,000, 700,000 to 2,400,000, 800,000 to 3,000,000, 800,000 to 2,600,000, or 800,000 to 2,400,000.

The ratio (Mw₂/Mw₁) of the weight-average molecular weight after storage (Mw₂) to the weight-average molecular weight after dehydration (Mw₁) may be 0.3 or more, 0.4 or more, 0.5 or more, 0.6 or more, 0.7 or more, 0.8 or more, 0.9 or more, or 0.95 or more. A larger Mw₂/Mw₁ is preferable because the weight-average molecular weight of the water absorbent resin for recycling does not change significantly between after dehydration and after storage of the water absorbent resin for recycling, indicating that damage to the structure of the water absorbent resin contained in the water absorbent resin for recycling is suppressed.

A water absorbent resin can be obtained by the method for producing a water absorbent resin described above. The obtained water absorbent resin can be used for the production of water absorbent resin particles. That is, another embodiment of the present invention is a method for producing water absorbent resin particles, comprising a preparation step of obtaining a water absorbent resin by the above-described production method.

The cross-linked structure of the cross-linked polymer of the water absorbent resin can be cleaved by bringing the water absorbent resin into contact with an acid component (for example, sulfuric acid), a base component (for example, sodium hydroxide), an oxidizing agent, a reducing agent, or the like. That is, in the cleavage step, a polymer may be obtained by cleaving the cross-linked structure of the cross-linked polymer by bringing the water absorbent resin into contact with at least one selected from the group consisting of an acid component, a base component, an oxidizing agent, and a reducing agent.

The acid component may be an inorganic acid, and may be, for example, at least one inorganic acid selected from the group consisting of acetic acid, nitric acid, sulfuric acid, hydrochloric acid, phosphoric acid, and boric acid, or at least one inorganic acid selected from sulfuric acid and hydrochloric acid. When the water absorbent resin and the acid component are brought into contact, the temperature may be 80 to 140°C.

The base component may be an inorganic base, for example, at least one inorganic base selected from the group consisting of sodium hydroxide, ammonia, potassium hydroxide, and calcium hydroxide, or at least one inorganic base selected from the group consisting of sodium hydroxide, potassium hydroxide, and calcium hydroxide. When bringing the water absorbent resin into contact with the base component, the temperature may be 50 to 120°C.

Specifically, for the cleavage of the cross-linked structure of the cross-linked polymer, for example, when cleaving the cross-linked structure with a base component, the cross-linked structure can be cleaved by stirring a solution containing the water absorbent resin and the base component in an environment of a temperature of 50 to 150°C and a pH of 10 or more for 1 to 50 hours.

When the water absorbent resin contains a cross-linked polymer having a poly(meth)acrylic acid structure, the polymer obtained by cleaving the cross-linked polymer has a poly(meth)acrylic acid structure. When the water absorbent resin contains a cross-linked polymer having a poly(meth)acrylic acid structure, the cross-linked polymer may be cleaved by bringing the water absorbent resin into contact with a base component from the viewpoint of easily producing water absorbent resin particles having high water absorption performance and a small amount of eluted components by avoiding cutting of the poly(meth)acrylic acid structure.

The weight-average molecular weight of the polymer obtained in the cleavage step may be 300,000 or more, 500,000 or more, 700,000 or more, 1,000,000 or more, 1,300,000 or more, 1,500,000 or more, 1,700,000 or more, or 1,900,000 or more. The weight-average molecular weight of the polymer may be 10,000,000 or less, 8,000,000 or less, 6,000,000 or less, 4,000,000 or less, 3,000,000 or less, or 2,000,000 or less. The weight-average molecular weight of the polymer may be 300,000 to 10,000,000, 500,000 to 6,000,000, or 1,000,000 to 3,000,000. The weight-average molecular weight of the polymer is measured by GPC (gel permeation chromatography) based on the following conditions.

### (Conditions)

Autosampler: Autosampler AS-11 (manufactured by FLOM Corporation).
Degasser: Gastorr AG-16 (manufactured by FLOM Corporation).
Pump: LC-10AD (manufactured by Shimadzu Corporation).
Column: OHpak SB-807HQ, SB-806HQ, SB-804HQ (Shodex series, manufactured by Resonac Corporation).
Detector: Triple Detector TDA 302 (manufactured by Viscotec).
Eluent: NaNO₃ (0.2 mol/L) / methylparaben (2 mmol/L) / distilled water.
Measurement conditions: Injection volume 500 µL, flow rate 0.5 mL/min, column/detector temperature 40°C, dn/dC 0.2270.
A sample liquid adjusted to contain 0.01 g of polymer is put into a 300 mL beaker, the above eluent is added thereto so that the total amount becomes 100 mL, and the mixture is stirred at 250 rpm for 1 hour. If the pH of the sample liquid is not neutral, it is adjusted to pH 7 using hydrochloric acid (Nacalai Tesque, 1 mol/L hydrochloric acid) or sodium hydroxide aqueous solution (Nacalai Tesque, 1 mol/L) at this time. The sample liquid after stirring is measured by GPC using a filtrate passed through a 0.8 µm filter syringe.

The method for producing water absorbent resin particles may include a step of solid-liquid separation (solid-liquid separation step) in order to remove impurities in the polymer solution after obtaining the polymer by cleaving the cross-linked structure of the cross-linked polymer. In the solid-liquid separation step, for example, filtration may be performed on the polymer solution, or ultrafiltration may be performed. In the solid-liquid separation step, the pH of the polymer solution may be adjusted to near neutral before performing filtration on the polymer solution.

The method for producing water absorbent resin particles may include a step of performing dilution, heating, addition of a salt (a salt containing a monovalent cation), or the like from the viewpoint of lowering the viscosity of the polymer solution after obtaining the polymer by cleaving the cross-linked structure of the cross-linked polymer and before carrying out the cross-linking step.

The method for producing water absorbent resin particles may include a step of performing sterilization treatment on the polymer solution after obtaining the polymer by cleaving the cross-linked structure of the cross-linked polymer and before carrying out the cross-linking step.

In the cross-linking step, for example, a solution containing a cross-linking agent capable of forming a covalent bond with a functional group possessed by the polymer is prepared, and the polymer is cross-linked via the covalent bond to obtain a cross-linked polymer. In the cross-linking step, the polymer solution may gel. In that case, the entire polymer solution loses fluidity, and a gel containing the cross-linked polymer and water is formed. When cross-linking proceeds to such an extent that a gel is formed, water absorbent resin particles having high water absorption performance and a small amount of eluted components are particularly easily obtained.

Examples of the functional group possessed by the polymer include a carboxyl group and the like. When the polymer has a carboxyl group, the polymer is cross-linked by a reaction between the carboxyl group and the cross-linking agent and/or a reaction between carboxyl groups. The covalent bond may be at least one selected from the group consisting of an ester bond, a thioester bond, an amide bond, an ether bond, and a carbon-carbon bond. The polymer may be cross-linked via at least one group selected from the group consisting of, for example, a carboxylic acid ester group, a thioester group, an amide group, an acid anhydride group, an oxyalkylene group, and an oxyarylene group.

Examples of the cross-linking agent include aliphatic polyhydric alcohols such as (poly)ethylene glycol, (poly)propylene glycol, (poly)glycerin, and pentaerythritol; glycidyl compounds such as (poly)ethylene glycol diglycidyl ether, (poly)propylene glycol diglycidyl ether, and (poly)glycerin diglycidyl ether; bisacrylamide compounds such as N,N'-methylenebis(meth)acrylamide; allylated starch; diallyl phthalate; N,N',N"-triallyl isocyanurate; divinylbenzene; ethylenediamine, polyethyleneimine, glycidyl (meth)acrylate, and the like.

The amount of the cross-linking agent may be 0.0001 parts by mass or more, 0.001 parts by mass or more, or 0.005 parts by mass or more, and may be 10 parts by mass or less, 10 parts by mass or less, or 5 parts by mass or less with respect to 100 parts by mass of the polymer. The amount of the cross-linking agent may be 0.0001 to 15 parts by mass, 0.001 to 10 parts by mass, or 0.005 to 5 parts by mass with respect to 100 parts by mass of the polymer.

The reaction temperature when cross-linking the polymer is appropriately set according to the type, amount, etc. of the cross-linking agent used, but may be 50°C or higher, 80°C or higher, or 100°C or higher, and may be 220°C or lower, 200°C or lower, or 180°C or lower. The reaction temperature when cross-linking the polymer may be 50 to 220°C, 80 to 200°C, or 100 to 180°C.

The reaction time when cross-linking the polymer is appropriately set according to the type, amount, reaction temperature, etc. of the cross-linking agent used, but may be 1 to 200 minutes, or 5 to 150 minutes.

The method for producing water absorbent resin particles may include a surface cross-linking step of performing surface cross-linking of the cross-linked polymer after obtaining the cross-linked polymer through the cross-linking step. Surface cross-linking can be performed, for example, by adding a cross-linking agent for performing surface cross-linking (surface cross-linking agent) to the cross-linked polymer and reacting them.

The surface cross-linking agent may be a compound having two or more reactive functional groups having reactivity with the cross-linked polymer. The surface cross-linking agent may be the same as or different from the cross-linking agent in the cross-linking step.

The reactive functional group of the surface cross-linking agent may be a carbonate group, an alcoholic hydroxyl group, an epoxy group, a halogeno group in a haloepoxy compound, an isocyanate group, an oxetanyl group, an oxazoline group, or a combination thereof. Since a carbonate group can react with other two molecules, it is regarded as two reactive functional groups.

Examples of the surface cross-linking agent having a carbonate group include alkylene carbonates (ethylene carbonate, etc.). Examples of the surface cross-linking agent having an alcoholic hydroxyl group include polyol compounds such as ethylene glycol, propylene glycol, 1,4-butanediol, trimethylolpropane, glycerin, polyoxyethylene glycol, polyoxypropylene glycol, and polyglycerin, and hydroxyalkylamide compounds (bis[N,N-di(β-hydroxyethyl)]adipamide, etc.). Examples of the surface cross-linking agent having two or more epoxy groups include (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether. Examples of the haloepoxy compound having an epoxy group and a halogeno group include epichlorohydrin, epibromohydrin, and α-methylepichlorohydrin. Examples of the surface cross-linking agent having an isocyanate group include 2,4-tolylene diisocyanate and hexamethylene diisocyanate. Examples of the surface cross-linking agent having an oxetanyl group include 3-methyl-3-oxetanemethanol, 3-ethyl-3-oxetanemethanol, 3-butyl-3-oxetanemethanol, 3-methyl-3-oxetaneethanol, 3-ethyl-3-oxetaneethanol, and 3-butyl-3-oxetaneethanol.

The amount of the surface cross-linking agent may be 0.001 parts by mass or more, 0.005 parts by mass or more, or 0.01 parts by mass or more, and may be 5 parts by mass or less, 3 parts by mass or less, or 1 part by mass or less with respect to 100 parts by mass of the cross-linked polymer. The amount of the cross-linking agent may be 0.001 to 5 parts by mass, 0.005 to 3 parts by mass, or 0.01 to 1 part by mass with respect to 100 parts by mass of the polymer.

A recycled water absorbent resin containing a cross-linked polymer is formed by a method including removing water from the cross-linked polymer obtained through the optional surface cross-linking step. When the reaction liquid subjected to the cross-linking step is an aqueous solution, water absorbent resin particles are formed by a method including a drying step of removing water from the massive cross-linked polymer formed by gelation of the reaction liquid itself and drying the cross-linked polymer to form a dried product, and a pulverization step of pulverizing the dried product.

The method for drying the cross-linked polymer may be a general method such as a squeezing method using centrifugation, dehydration using an organic solvent, natural drying, heat drying, blast drying, freeze drying, or a combination thereof. The heating temperature for drying may be 80 to 220°C, 90 to 200°C, or 100 to 180°C from the viewpoint of efficiently removing water.

The water content of the dried product may be, for example, 20 mass% or less, 10 mass% or less, or 5 mass% or less. The water content of the dried product means the ratio of the amount of water in the dried product based on the total amount of the dried product. Regarding the water content of the dried product, when the cross-linked polymer containing water is heated at 200°C for 2 hours, the difference in mass of the cross-linked polymer before and after heating can be regarded as the water content of the dried product.

The method for producing water absorbent resin particles may include a step of forming a coarsely pulverized product containing structures of a somewhat small size by coarsely pulverizing the cross-linked polymer before drying the cross-linked polymer. By forming a coarsely pulverized product, water can be removed efficiently. The structures constituting the coarsely pulverized product can be, for example, elongated structures, granular structures (particles), or combinations thereof. The coarsely pulverized product may contain a plurality of structures having a shape capable of passing through a circular hole with a diameter of 10 mm or 7 mm. Even if the elongated structure is bent, if its maximum width is 10 mm or less, it can be said to have a shape capable of passing through a circular hole with a diameter of 10 mm. The granular structures (particles) may be amorphous and may have a shape capable of passing through a circular hole with a diameter of 10 mm while changing orientation. Examples of the coarse pulverizer for coarsely pulverizing the cross-linked polymer include a kneader (for example, a pressure kneader, a double-arm kneader), a meat chopper, a cutter mill, and a Pharma mill.

In the pulverization step of pulverizing the dried product, water absorbent resin particles are formed by pulverizing the dried product. The method of pulverization is not particularly limited. In the pulverization step of pulverizing the dried product, the dried product can be pulverized using a pulverizer such as, for example, a centrifugal pulverizer, a roller mill, a stamp mill, a jet mill, a high-speed rotary pulverizer, and a container-driven mill.

The method for producing water absorbent resin particles may include a step of classifying the water absorbent resin particles obtained by pulverization. Classification means an operation of dividing a particle group (powder) into two or more particle groups having different particle size distributions. A part of the water absorbent resin particles after classification may be pulverized and classified again.

The method of classification is not particularly limited, but may be, for example, screen classification or air classification. Screen classification is a method of classifying particles on a screen into particles that pass through the mesh of the screen and particles that do not pass through by vibrating the screen. Screen classification can be performed using, for example, a vibrating sieve, a rotary shifter, a cylindrical stirring sieve, a blower shifter, or a Ro-Tap shaker. Air classification is a method of classifying particles using an air flow.

The median particle size of the powder of the cross-linked polymer obtained through pulverization and, if necessary, classification may be, for example, 200 to 500 µm, or 300 to 500 µm. The particle size distribution may be adjusted by mixing two or more powders having different median particle sizes obtained by classification.

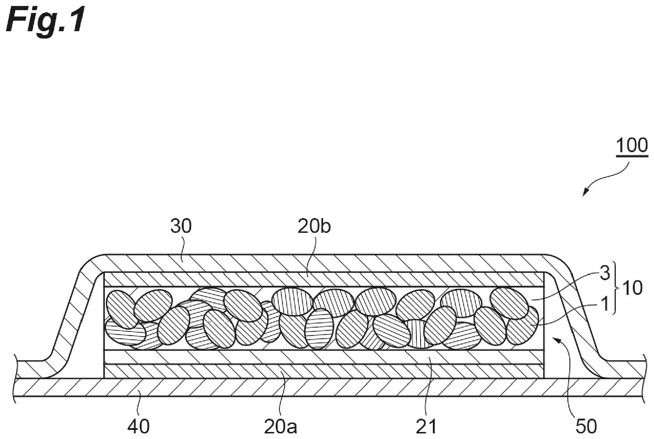

Fig. 1 is a cross-sectional view showing an example of an absorbent article having an absorbent core containing water absorbent resin particles. The absorbent article 100 shown in Fig. 1 includes a water absorbent sheet 50 having a film-like absorbent core 10, a liquid-permeable sheet 30, and a liquid-impermeable sheet 40.

The water absorbent sheet 50 has an absorbent core 10 containing powder of water absorbent resin particles 1, and two core wrap sheets 20a and 20b. The absorbent core 10 is disposed inside the core wrap sheets 20a and 20b. The absorbent core 10 is shape-retained by being sandwiched between the two core wrap sheets 20a and 20b. The core wrap sheets 20a and 20b may be two sheets, or may be one folded sheet or one bag body. A sheet member in which no other constituent member is provided on the outside of the core wrap sheets 20a and 20b wrapping the absorbent core 10 may be particularly referred to as a water absorbent sheet.

The absorbent core 10 is a constituent member that mainly contains powder of the water absorbent resin particles 1 and is shape-retained to have a certain shape. The absorbent core 10 may contain a fibrous material 3 in addition to the powder of the water absorbent resin particles 1, or may not contain the fibrous material 3. The content of the water absorbent resin particles 1 in the absorbent core 10 may be 50 mass% or more and 100 mass% or less, 60 mass% or more and 100 mass% or less, 70 mass% or more and 100 mass% or less, 80 mass% or more and 100 mass% or less, or 90 mass% or more and 100 mass% or less based on the mass of the absorbent core 10.

The thickness of the absorbent core 10 may be, for example, 20 mm or less, 15 mm or less, 10 mm or less, 5 mm or less, 4 mm or less, or 3 mm or less, and may be 0.1 mm or more, or 0.3 mm or more. The thickness of the absorbent core 10 may be 0.1 mm or more and 20 mm or less. The mass per unit area of the absorbent core 10 may be 1000 g/m² or less, 800 g/m² or less, or 600 g/m² or less, and may be 100 g/m² or more.

The fibrous material 3 can be, for example, cellulosic fibers, synthetic fibers, or a combination thereof. Examples of cellulosic fibers include pulverized wood pulp, cotton, cotton linter, rayon, and cellulose acetate. Examples of synthetic fibers include polyamide fibers, polyester fibers, and polyolefin fibers. The fibrous material may be hydrophilic fibers (for example, pulp).

The absorbent core 10 may further contain inorganic powder (for example, amorphous silica), a deodorant, an antibacterial agent, a fragrance, and the like. When the water absorbent resin particles 1 contain inorganic particles, the absorbent core 10 may contain inorganic powder separately from the inorganic particles in the water absorbent resin particles 1.

The water absorbent sheet 50 may further have an adhesive 21 interposed between the core wrap sheet 20a and the absorbent core 10. An adhesive layer may be interposed between the core wrap sheets 20a and 20b on both sides and the absorbent core 10. The adhesive 21 is not particularly limited, and may be, for example, a hot melt adhesive.

The core wrap sheets 20a and 20b may be, for example, non-woven fabrics. The two core wrap sheets 20a and 20b can be the same or different non-woven fabrics. The non-woven fabric may be a non-woven fabric composed of short fibers (i.e., staples) (short fiber non-woven fabric) or a non-woven fabric composed of long fibers (i.e., filaments) (long fiber non-woven fabric). The staples are not limited to this, but may generally have a fiber length of several hundred mm or less.

The core wrap sheets 20a and 20b may be a thermal bond non-woven fabric, an air-through non-woven fabric, a resin bond non-woven fabric, a spunbond non-woven fabric, a melt-blown non-woven fabric, an air-laid non-woven fabric, a spunlace non-woven fabric, a point bond non-woven fabric, or a laminate containing two or more non-woven fabrics selected from these.

The non-woven fabric used as the core wrap sheets 20a and 20b can be a non-woven fabric formed of synthetic fibers, natural fibers, or a combination thereof. Examples of synthetic fibers include fibers containing a synthetic resin selected from polyolefins such as polyethylene (PE) and polypropylene (PP), polyesters such as polyethylene terephthalate (PET), polytrimethylene terephthalate (PTT), and polyethylene naphthalate (PEN), polyamides such as nylon, and rayon. Examples of natural fibers include fibers containing cotton, silk, hemp, or pulp (cellulose). The fibers forming the non-woven fabric may be polyolefin fibers, polyester fibers, or a combination thereof. The core wrap sheets 20a and 20b may be tissue paper.

The water absorbent sheet 50 may be used to produce various other absorbent articles. Examples of absorbent articles include diapers (for example, paper diapers), toilet training pants, incontinence pads, sanitary materials (sanitary napkins, tampons, etc.), sweat pads, pet sheets, portable toilet members, and animal excrement treatment materials. The absorbent cores constituting these absorbent articles often move or deform due to the movement of the user of the absorbent article, etc.

The liquid-permeable sheet 30 is disposed at the position of the outermost layer on the side where the liquid to be absorbed enters. The liquid-permeable sheet 30 is disposed on the outside of the core wrap sheet 20b in contact with the core wrap sheet 20b. The liquid-impermeable sheet 40 is disposed at the position of the outermost layer on the side opposite to the liquid-permeable sheet 30 in the absorbent article 100. The liquid-impermeable sheet 40 is disposed on the outside of the core wrap sheet 20a in contact with the core wrap sheet 20a. The liquid-permeable sheet 30 and the liquid-impermeable sheet 40 have a main surface wider than the main surface of the water absorbent sheet 50, and the outer edge portions of the liquid-permeable sheet 30 and the liquid-impermeable sheet 40 extend around the absorbent core 10 and the core wrap sheets 20a and 20b. However, the size relationship among the absorbent core 10, the core wrap sheets 20a and 20b, the liquid-permeable sheet 30, and the liquid-impermeable sheet 40 is not particularly limited, and is appropriately adjusted according to the use of the absorbent article, etc.

The liquid-permeable sheet 30 may be a non-woven fabric. The non-woven fabric used as the liquid-permeable sheet 30 may have appropriate hydrophilicity from the viewpoint of the liquid absorption performance of the absorbent article. From that viewpoint, the liquid-permeable sheet 30 may be a non-woven fabric having a hydrophilicity of 5 to 200 measured according to the measurement method of Pulp and Paper Test Method No. 68 (2000) by the Japan Technical Association of the Pulp and Paper Industry. The hydrophilicity of the non-woven fabric may be 10 to 150. For details of Pulp and Paper Test Method No. 68, reference can be made to, for example, WO 2011/086843.

The non-woven fabric having hydrophilicity may be, for example, one formed of fibers showing appropriate hydrophilicity such as rayon fibers, or one formed of fibers obtained by subjecting hydrophobic chemical fibers such as polyolefin fibers and polyester fibers to hydrophilization treatment. Examples of the method for obtaining a non-woven fabric containing hydrophilized hydrophobic chemical fibers include a method of obtaining a non-woven fabric by a spunbond method using a mixture of hydrophobic chemical fibers and a hydrophilizing agent, a method of accompanying a hydrophilizing agent when producing a spunbond non-woven fabric with hydrophobic chemical fibers, and a method of impregnating a spunbond non-woven fabric obtained using hydrophobic chemical fibers with a hydrophilizing agent. As the hydrophilizing agent, anionic surfactants such as aliphatic sulfonates and higher alcohol sulfates, cationic surfactants such as quaternary ammonium salts, nonionic surfactants such as polyethylene glycol fatty acid esters, polyglycerin fatty acid esters, and sorbitan fatty acid esters, silicone surfactants such as polyoxyalkylene-modified silicones, and stain release agents composed of polyester, polyamide, acrylic, and urethane resins, etc. are used.

The basis weight (mass per unit area) of the non-woven fabric used as the liquid-permeable sheet 30 may be 5 to 200 g/m², 8 to 150 g/m², or 10 to 100 g/m² from the viewpoint of imparting good liquid permeability, flexibility, strength, and cushioning properties to the absorbent article, and from the viewpoint of increasing the liquid permeation speed of the absorbent article. The thickness of the liquid-permeable sheet 30 may be 20 to 1400 µm, 50 to 1200 µm, or 80 to 1000 µm.

The liquid-impermeable sheet 40 prevents the liquid absorbed by the absorbent core 10 from leaking to the outside from the liquid-impermeable sheet 40 side. The liquid-impermeable sheet 40 may be a resin sheet or a non-woven fabric. The resin sheet may be a sheet made of a synthetic resin such as polyethylene, polypropylene, or polyvinyl chloride. The non-woven fabric may be a spunbond/melt-blown/spunbond (SMS) non-woven fabric in which a water-resistant melt-blown non-woven fabric is sandwiched between high-strength spunbond non-woven fabrics. The liquid-impermeable sheet 40 may be a composite sheet of a resin sheet and a non-woven fabric (for example, a spunbond non-woven fabric, a spunlace non-woven fabric). The liquid-impermeable sheet 40 may have air permeability from the viewpoint that stuffiness during wearing is reduced and discomfort given to the wearer can be reduced. As the liquid-impermeable sheet 40 having air permeability, for example, a sheet of low-density polyethylene (LDPE) resin can be used.

From the viewpoint of ensuring flexibility so as not to impair the wearing feeling of the absorbent article, the basis weight (mass per unit area) of the liquid-impermeable sheet 40 may be 10 to 50 g/m².

### Examples

The present invention will be described in more detail with reference to examples below.

### <Evaluation Method>

The weight-average molecular weight and the swelling ratio were measured according to the following evaluation methods. The measurement results are as shown in Table 1.

### [Weight-Average Molecular Weight]

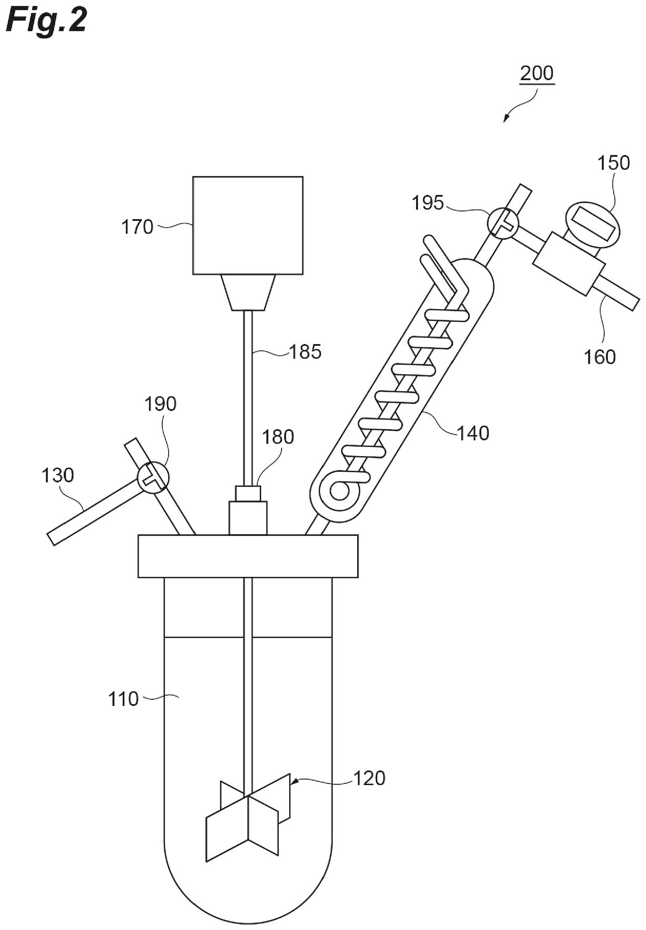

As shown in Fig. 2, a reflux condenser, a nitrogen gas introduction tube, and a stirrer (a 150 mL round-bottom cylindrical separable flask equipped with a stirring blade having four inclined paddle blades with a blade diameter of 40 mm, manufactured by EYELA) were prepared. 1 g of the water absorbent resin for recycling immediately after dehydration or the water absorbent resin for recycling immediately after storage for 7 days was weighed out in terms of solid content into the separable flask, and 4.0 g of 30% sodium hydroxide was added. Thereafter, ion-exchanged water was added so that the total amount of the contents of the separable flask became 100 g. Stirring was started at 300 rpm, and nitrogen gas was blown into the separable flask at 200 mL/min for 15 minutes to replace the inside of the separable flask with nitrogen. Thereafter, the temperature was raised using a personal organic synthesis reaction apparatus (manufactured by EYELA), and the internal temperature was maintained at 80°C for 6 hours to obtain a decomposition liquid containing a polymer which is a solubilized (cross-linked structure cleaved) water absorbent resin. The time point when the decomposition liquid was obtained was 7 hours after the time point when the water absorbent resin for recycling was finally obtained by filtering with a standard sieve with a mesh opening of 75 µm as described later, or the time point when the water absorbent resin for recycling had been stored for 7 days. Immediately after obtaining the decomposition liquid, the weight-average molecular weight of the polymer contained in the decomposition liquid was measured by light scattering GPC under the following conditions, and the obtained weight-average molecular weight was taken as the weight-average molecular weight of the water absorbent resin for recycling. The time point when the measurement of the weight-average molecular weight was completed was 8.5 hours after the time point when the water absorbent resin for recycling was finally obtained by filtering with a standard sieve with a mesh opening of 75 µm as described later, or the time point when the water absorbent resin for recycling had been stored for 7 days. Further, the ratio of the weight-average molecular weight of the water absorbent resin for recycling after storage to the weight-average molecular weight of the water absorbent resin for recycling after dehydration (weight-average molecular weight of water absorbent resin for recycling after storage / weight-average molecular weight of water absorbent resin for recycling after dehydration) was calculated.

### (Conditions)

Autosampler: Autosampler AS-11 (manufactured by FLOM Corporation).
Degasser: Gastorr AG-16 (manufactured by FLOM Corporation).
Pump: LC-10AD (manufactured by Shimadzu Corporation).
Column: OHpak SB-807HQ, SB-806HQ, SB-804HQ (Shodex series, manufactured by Resonac Corporation).
Detector: Triple Detector TDA 302 (manufactured by Viscotec).
Eluent: NaNO₃ (0.2 mol/L) / methylparaben (2 mmol/L) / distilled water.
Measurement conditions: Injection volume 500 µL, flow rate 0.5 mL/min, column/detector temperature 40°C, dn/dC 0.2270.
A sample liquid adjusted to contain 0.01 g of polymer is put into a 300 mL beaker, the above eluent is added thereto so that the total amount becomes 100 mL, and the mixture is stirred at 250 rpm for 1 hour. If the pH of the sample liquid is not neutral, it is adjusted to pH 7 using hydrochloric acid (Nacalai Tesque, 1 mol/L hydrochloric acid) or sodium hydroxide aqueous solution (Nacalai Tesque, 1 mol/L). The sample liquid after stirring is measured by GPC using a filtrate passed through a 0.8 µm filter syringe.

### [Swelling Ratio]

The mass of the water absorbent resin for recycling after dehydration was measured, and the swelling ratio was calculated by the following formula. Swelling ratio [times] = Mass of water absorbent resin for recycling after dehydration [g] / Pure content of water absorbent resin in water absorbent resin for recycling [g]

### (Example 1)

A commercially available paper diaper (manufactured by Kao Corporation, Merries Pants Suhadasarasara Air Through L size) was prepared, and a water absorbent resin for recycling containing a cross-linked polymer containing acrylic acid and acrylate as monomer units was collected from the paper diaper.

10 g (100 parts by mass) of the water absorbent resin for recycling was put into 4000 g of physiological saline (liquid temperature 25°C) contained in a 5 L poly beaker, stirred at 100 rpm for 10 minutes using a Three-One Motor (HEIDON BLh1200, manufactured by Shinto Scientific Co., Ltd.) equipped with two stages of 75 mm paddle blades, and then filtered with a standard sieve with a mesh opening of 75 µm to recover the swollen water absorbent resin for recycling remaining on the sieve. Subsequently, the swollen water absorbent resin for recycling was put into 4000 g (40000 parts by mass, liquid temperature 25°C) of a 1 mass% citric acid aqueous solution contained in a 5 L poly beaker, stirred at 100 rpm for 10 minutes using the above-mentioned Three-One Motor, and subjected to dehydration (inactivation) treatment. After filtering with a standard sieve with a mesh opening of 75 µm, the water absorbent resin for recycling on the sieve was put into 2 L of ion-exchanged water contained in a 5 L poly beaker and washed by stirring at 100 rpm for 3 minutes using the above-mentioned Three-One Motor. Thereafter, it was filtered with a standard sieve with a mesh opening of 75 µm to obtain 224.13 g of the water absorbent resin for recycling after dehydration. The swelling ratio of the water absorbent resin for recycling (mass of water absorbent resin for recycling after dehydration) / (pure content of water absorbent resin in water absorbent resin for recycling (in this example, the mass of the water absorbent resin for recycling collected from the diaper was regarded as the pure content of the water absorbent resin)) was 22.4 times (= 224.13/10). The weight-average molecular weight of the water absorbent resin for recycling after dehydration was 1,979,000.

Next, the water absorbent resin for recycling after dehydration was placed in a 100 mL glass beaker and wrapped, and stored in a constant temperature and humidity chamber (ESPEC Corp., LH-113, temperature 50°C, humidity 50 RH%) for 7 days. The weight-average molecular weight of the water absorbent resin for recycling after storage for 7 days was 1,719,000. The starting point of the 7 days (storage period) was the time point when the water absorbent resin for recycling was obtained by finally filtering with a standard sieve with a mesh opening of 75 µm as described above.

### (Examples 2 to 9, Comparative Examples 1 to 2)

The same operation as in Example 1 was performed, and the water absorbent resin after dehydration was obtained by changing each condition as shown in Table 1. Further, the weight-average molecular weight of the water absorbent resin for recycling after dehydration, the weight-average molecular weight of the water absorbent resin for recycling after storage for 7 days, the ratio of the weight-average molecular weight of the water absorbent resin for recycling after storage to the weight-average molecular weight of the water absorbent resin for recycling after dehydration, and the swelling ratio were measured. The measurement results are shown in Table 1.

**[Table 1]**

| | Dehydration step | | | | | Storage step | Weight-average molecular weight | | |
|---|---|---|---|---|---|---|---|---|---|
| | Additive | Addition amount [parts by mass] | pH | Treatment temperature [°C] | Swelling ratio [times] | Storage temperature [°C] | After dehydration [×10⁴] | After storage [×10⁴] | Ratio |
| Example 1 | 1% Citric acid aqueous solution | 40000 | 2.22 | 25 | 22.4 | 50 | 197.9 | 171.9 | 86.9 |
| Example 2 | 5% Citric acid aqueous solution | *40000* | *1.82* | 25 | 11.7 | 50 | 200.7 | 164.1 | 81.8 |
| Example 3 | 1% Citric acid aqueous solution | 40000 | 2.22 | 25 | 21.5 | 70 | 213.8 | 80.8 | 37.8 |
| Example 4 | 1% Sulfuric acid aqueous solution | 20000 | 1.04 | 25 | 11.1 | 50 | 204.5 | 181.4 | 88.7 |
| Example 5 | 100% Citric acid powder | 400 | - | 25 | 14.3 | 25 | 233.6 | 225.3 | 96.4 |
| Example 6 | 30% Citric acid aqueous solution | 1300 | 1.16 | 90 | 15.8 | 70 | 224.1 | 130.5 | 58.2 |
| Example 7 | 30% Citric acid aqueous solution | 1300 | 1.16 | 25 | 14.7 | 5 | 238.3 | 189.5 | 79.5 |
| Example 8 | 5% Calcium chloride aqueous solution | 40000 | 9.58 | 25 | 4.3 | 50 | 204.2 | 186.2 | 91.2 |
| Example 9 | 1% Calcium chloride aqueous solution | 20000 | 7.48 | 25 | 6.1 | 80 | 201.8 | 189.4 | 93.9 |
| Comparative Example 1 | 1% Citric acid aqueous solution | 40000 | 2.22 | 25 | 22.9 | 80 | 209.5 | 4.0 | 1.9 |
| Comparative Example 2 | 1% Sulfuric acid aqueous solution | 20000 | 1.04 | 25 | 12.4 | 80 | 159.5 | 9.9 | 6.2 |

In Examples 1 to 9, the weight-average molecular weight was sufficiently large both after dehydration of the water absorbent resin for recycling and after storage for a certain period from dehydration, whereas in Comparative Examples 1 to 2, although the weight-average molecular weight of the water absorbent resin for recycling after dehydration was sufficiently large, it can be seen that the weight-average molecular weight at the time point when stored for 7 days was small. That is, in Examples 1 to 9, a water absorbent resin that is easy to reuse could be produced from the water absorbent resin for recycling.

Further, from the comparison between Examples 1 and 3 and Comparative Example 1 and the comparison between Example 4 and Comparative Example 2, it can be seen that when an acid component is used as an additive, if the temperature of the environment in which the water absorbent resin for recycling after dehydration is placed (storage temperature in the storage step) becomes high, the weight-average molecular weight of the water absorbent resin for recycling at the time point when stored for 7 days tends to decrease. On the other hand, from Examples 8 and 9, it can be seen that when a polyvalent metal salt is used as an additive, even if the temperature of the environment in which the water absorbent resin for recycling after dehydration is placed (storage temperature in the storage step) becomes high, the weight-average molecular weight of the water absorbent resin for recycling at the time point when stored for 7 days is sufficiently large.

### Reference Signs List

1... Water absorbent resin particles, 10... Absorbent core, 20a, 20b... Core wrap sheet, 30... Liquid-permeable sheet, 40... Liquid-impermeable sheet, 50... Water absorbent sheet, 100... Absorbent article, 110... Round-bottom cylindrical separable flask, 120... Four inclined paddle blades, 130... Nitrogen gas introduction tube, 140... Reflux condenser, 150... Oxygen concentration meter, 160... Gas discharge tube, 170... Stirring motor, 180... Shaft holder, 185... Stirring shaft, 190, 195... Three-way cock, 200... Treatment tank.

## Claims

1. A method for producing a water absorbent resin, comprising:
a dehydration step of dehydrating a water absorbent resin for recycling comprising water and a water absorbent resin,
wherein the dehydration step is carried out such that the water absorbent resin for recycling after the dehydration has a weight-average molecular weight of 1,000,000 or more, and
wherein after the dehydration step, the water absorbent resin for recycling after the dehydration is placed in an environment where the weight-average molecular weight is 300,000 or more at a time point when 7 days have elapsed.

2. The method for producing according to claim 1, wherein the dehydration step is a step of bringing the water absorbent resin for recycling into contact with at least one substance selected from the group consisting of an acid component, a polyvalent metal salt, and an alcohol.

3. The method for producing according to claim 1, wherein a temperature of the environment is 70°C or less.

4. The method for producing according to claim 1, further comprising a storage step of storing the water absorbent resin for recycling after the dehydration,
wherein the environment in which the water absorbent resin for recycling after the dehydration is stored in the storage step is an environment where the weight-average molecular weight of the water absorbent resin for recycling after the dehydration is maintained at 300,000 or more at a time point when the water absorbent resin for recycling has been stored for 7 days.

5. The method for producing according to claim 4, wherein the storage step is a step of storing the water absorbent resin for recycling after the dehydration for 1 hour or more from the dehydration.

6. A method for producing water absorbent resin particles, comprising:
a preparation step of obtaining a water absorbent resin by the method for producing according to any one of claims 1 to 5;
a cleavage step of cleaving a cross-linked structure of a cross-linked polymer contained in the water absorbent resin to obtain a polymer; and
a cross-linking step of cross-linking the polymer.
